# EUROPEAN PATENT APPLICATION

(11) **EP 4 733 760 A1**
(43) Date of publication of application: **29.04.2026**
(21) Application number: 24825696.8
(22) Date of filing: 31.05.2024
(51) Int. Cl.: G01N 33/48, G01N 1/28, G01N 1/30, G01N 33/53

(54) **STAINING CONDITION EVALUATION METHOD AND COMPUTER-READABLE PROGRAM**

(30) Priority: 21.06.2023 JP 2023101954
(71) Applicant: SCREEN Holdings Co., Ltd., Kyoto-shi, Kyoto 602-8585 (JP)
(72) Inventor: OGI, Hiroshi, Kyoto-shi, Kyoto 602-8585 (JP); MORIWAKI, Sanzo, Kyoto-shi, Kyoto 602-8585 (JP)
(74) Representative: Goddar, Heinz J.
(86) International application number: PCT/JP2024/020093
(87) International publication number: WO 2024/262289

(57) **Abstract**

A staining-condition evaluation method includes the step of applying a first primary antibody to a test specimen under a first staining condition (step S11), the step of capturing an image of the test specimen to acquire a first image (step S13), the step of applying a second primary antibody to the test specimen under a second staining condition (step S15), the step of capturing an image of the test specimen to acquire a second image (step S17), and the step of determining the propriety or impropriety of the first and second staining conditions in accordance with the result of detecting stained cells in each of the first and second images (step S18). In step S18, the first and second staining conditions are determined to be appropriate when cells on the test specimen are stained in a specific manner in the first image, when cells on the test specimen, different from the cells stained in the first image, are stained in a specific manner in the second image, and when the cells stained in the first image are not stained in the second image on the test specimen.

## Description

### TECHNICAL FIELD

The present invention relates to a technique for evaluating a staining condition for a specimen in immunostaining.

### CROSS-REFERENCE TO RELATED APPLICATIONS

This application claims priority benefit of Japanese Patent Application No. JP2023-101954 filed in the Japan Patent Office on June 21, 2023, the entire disclosure of which is incorporated herein by reference.

### BACKGROUND ART

In recent year's research in medical or biological sciences, biological specimens such as tissue specimens or cell specimens are analyzed in units of single cells for the purpose of the elucidation of mechanisms such as disease mechanisms, biological mechanisms, or drug action mechanisms. For example, immunostaining analysis realize quantitative and qualitative analysis of biological molecules such as protein by staining the biological molecules to measure their staining conditions.

The aforementioned immunostaining analysis requires staining conditions for specimens to become suitable for analysis. For example, in the blood smear preparing apparatus disclosed in Japanese Patent Application Laid-Open No. 2011-185895 (Document 1), when a undiluted stain solution is replaced, staining conditions for specimens (e.g., the staining time or the dilution rate of the undiluted stain solution) are changed based on the difference between the average nuclear G-value of white blood cells and a target nuclear G-value in test-stained specimens in order to reduce differences depending on the manufacturer or between lots of the undiluted stain solution and thereby equalize the staining conditions for specimens.

Japanese Unexamined Patent Application Publication (Translation of PCT Application) No. 2020-523614 (Document 2) proposes to provide a detection area and a control area on a process recording slide for immunostaining, the detection area being a space for detection by immunostaining, the control area being a reference space for qualitative or quantitative determination of the color density of a stained tissue or the like.

Meanwhile, as the immunostaining analysis, multiple immunostaining is known in which immunostaining, imaging, and color removal are repeatedly performed multiple times on one specimen while changing antibodies or the like used for immunostaining. In the multiple immunostaining, if the immunostaining using one antibody is performed under an inappropriate condition such as an inappropriate concentration of the antibody or an inappropriate reaction time of the antibody, not only the immunostaining using the antibody but also subsequent immunostaining using other antibodies may be adversely affected, which may result in a decrease in analysis accuracy.

### SUMMARY OF THE INVENTION

The present invention aims to facilitate determination of the propriety or impropriety of a staining condition.

Aspect 1 of the present invention is a staining-condition evaluation method of evaluating a staining condition for a specimen in immunostaining. The staining-condition evaluation method includes a) applying a first primary antibody to a test specimen under a first staining condition, b) after the process a), applying a secondary antibody and a chromogenic substrate to the test specimen, c) after the process b), capturing an image of the test specimen to acquire a first image, d) after the process c), inactivating or removing the first primary antibody on the test specimen, e) after the process d), applying a second primary antibody to the test specimen under a second staining condition, f) after the process e), applying the secondary antibody and the chromogenic substrate to the test specimen, g) after the process f), capturing an image of the test specimen to acquire a second image, and h) after the process g), determining propriety or impropriety of the first staining condition and the second staining condition in accordance with a result of detecting whether or not there is a stained cell in each of the first image and the second image. A cell stained using the first primary antibody is different from a cell stained using the second primary antibody. In the process h), the first staining condition and the second staining condition are determined to be appropriate when a cell on the test specimen is stained in a specific manner in the first image, when a cell on the test specimen, different from the cell stained in the first image, is stained in a specific manner in the second image, and when the cell stained in the first image is not stained in the second image on the test specimen.

According to the present invention, it is possible to facilitate the determination of the propriety or impropriety of the staining condition.

Aspect 2 of the present invention is the staining-condition evaluation method according to Aspect 1, in which in the process h), the detection of whether or not there is a stained cell in the first image and the detection of whether or not there is a stained cell in the second image are each conducted using a trained model created by machine learning.

Aspect 3 of the present invention is the staining-condition evaluation method according to Aspect 1 or 2. Before the process a), a slide with the test specimen and another test specimen placed thereon is prepared. In the process a), the first primary antibody is applied to the other test specimen under a third staining condition. In the process b), the secondary antibody and the chromogenic substrate are also applied to the other test specimen. In the process c), an image of the other test specimen is captured to acquire a third image. In the process d), the first primary antibody on the other test specimen is also inactivated or removed. In the process e), the second primary antibody is applied to the other test specimen under a fourth staining condition. In the process f), the secondary antibody and the chromogenic substrate are also applied to the other test specimen. In the process g), an image of the other test specimen is captured to acquire a fourth image. In the process h), propriety or impropriety of the third staining condition and the fourth staining condition is also determined in accordance with a result of detecting whether or not there is a stained cell in each of the third image and the fourth image. In the process h), the third staining condition and the fourth staining condition are determined to be appropriate when a cell on the other test specimen is stained in a specific manner in the third image, when a cell on the other test specimen, different from the cell stained in the third image, is stained in a specific manner in the fourth image, and when the cell stained in the third image is not stained in the fourth image on the other test specimen.

Aspect 4 of the present invention is the staining-condition evaluation method according to Aspect 1 or 2 (or according to any one of Aspects 1 to 3), in which the first primary antibody and the second primary antibody are used in sequential multiple immunostaining of one specimen, and in the sequential multiple immunostaining, staining using the second primary antibody is conducted after staining using the first primary antibody.

Aspect 5 of the present invention is a computer-readable program for causing a computer to evaluate a staining condition for a specimen in immunostaining. The computer-readable program causes a computer to execute i) storing a first image and a second image, the first image being an image of a test specimen that is stained, the second image being an image of the test specimen that is stained under a different condition from a condition for the first image, and j) determining propriety or impropriety of a staining condition in accordance with a result of detecting whether or not there is a stained cell in each of the first image and the second image. The first image is captured while a first primary antibody is applied to the test specimen under a first staining condition, and a secondary antibody and a chromogenic substrate are further applied to the test specimen. The second image is captured while, after the first image is acquired and the first primary antibody on the test specimen is inactivated or removed, a second primary antibody is applied to the test specimen under a second staining condition, and the secondary antibody and the chromogenic substrate are further applied to the test specimen. A cell stained using the first primary antibody is different from a cell stained using the second primary antibody. In the process j), the first staining condition and the second staining condition are determined to be appropriate when a cell on the test specimen is stained in a specific manner in the first image, when a cell on the test specimen, different from the cell stained in the first image, is stained in a specific manner in the second image, and when the cell stained in the first image is not stained in the second image on the test specimen.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a flowchart showing a procedure for evaluating a staining condition according to a first embodiment.
Fig. 2 is a diagram showing one example of a first image.
Fig. 3 is a diagram showing one example of a second image.
Fig. 4 is a diagram showing a configuration of a computer.
Fig. 5 is a flowchart showing part of a procedure for evaluation in a staining-condition evaluation method.
Fig. 6 is a plan view of a slide used in a staining-condition evaluation method according to a second embodiment.

### DESCRIPTION OF EMBODIMENTS

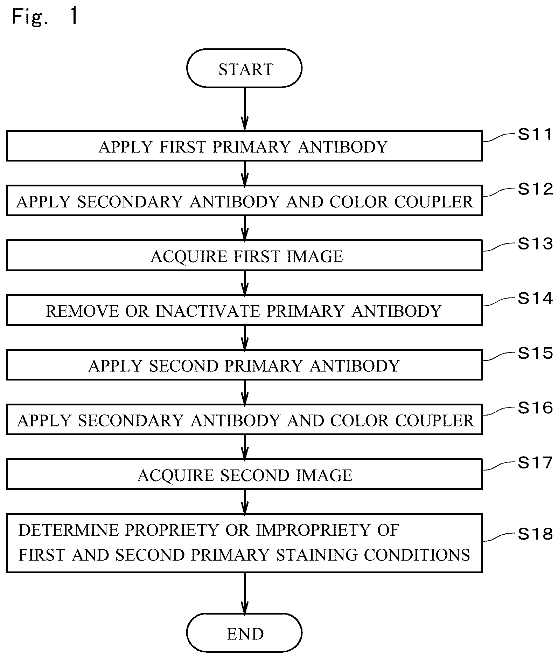

Fig. 1 is a flowchart showing a procedure for evaluation in a staining-condition evaluation method according to a first embodiment of the present invention. The staining-condition evaluation method is used when evaluating a staining condition for a specimen (e.g., a biological specimen) in immunostaining.

For example, the staining-condition evaluation method may be used to evaluate a staining condition in a sequential multiple immunostaining. The sequential multiple immunostaining is multiple immunostaining in which immunostaining, observation (e.g., imaging), and color removal are repeatedly performed multiple times on one specimen while changing antibodies or the like used in immunostaining. The following description is given regarding a procedure for evaluating the propriety or impropriety of a staining condition for the N-th immunostaining and the (N+1)-th immunostaining (N is an integer greater than or equal to one) among multiple repetitions of immunostaining during sequential multiple immunostaining.

In the staining-condition evaluation method, first, a test specimen that is used in the evaluation of a staining condition is prepared. For example, the test specimen is obtained from the same tissue as a specimen that is to be stained and analyzed in the aforementioned sequential multiple immunostaining. The test specimen is then subjected to antigen retrieval (e.g., heat treatment or enzyme treatment) and the application of a primary antibody under a staining condition with which the N-th immunostaining is considered to be carried out in the above-described sequential multiple immunostaining (step S11). The primary antibody is a primary antibody that is used in the above-described N-th immunostaining, and is hereinafter also referred to as the "first primary antibody". In the following description, the staining condition used in step S11 is also referred to as the "first staining condition" or the "first primary staining condition".

The first primary antibody is an immunoglobulin that binds to a specific antigen (e.g., protein, peptide, or small molecules) and binds to the antigen with high affinity and specificity. Examples of the first primary antibodies that can be used include antibodies derived from various animal species such as a mouse, a rabbit, a goat, and a chicken. The same applies to a second primary antibody which will be described later.

The first primary staining condition includes, for example, at least one of the concentration of the first primary antibody applied to the test specimen and the time of applying the first primary antibody to the test specimen (i.e., the reaction time). The first primary staining condition may also include, for example, a treatment condition for antigen retrieval. In the case where antigen retrieval is heat treatment, the treatment condition includes, for example, at least one of the pH of an antigen activation solution used in the antigen retrieval and the temperature and time of heating the test specimen. The same also applies to a second primary staining condition which will be described later.

When step S11 ends, a secondary antibody and a chromogenic substrate are applied to the test specimen under a staining condition with which the above-described N-th immunostaining is to be carried out (hereinafter, also referred to as the "secondary staining condition ") (step S12). As a result, specific cells or the like that bind to the primary antibody in the test specimen are stained. The secondary antibody and the chromogenic substrate are those used in the above-described N-th immunostaining.

The secondary antibody is an antibody that binds to the primary antibody and corresponds to an antibody derived from the animal species related to the production of the primary antibody. For example, in the case where the first primary antibody used in step S11 is a mouse-derived antibody, the secondary antibody that is used in step S12 is an anti-mouse antibody. As the chromogenic substrate, various chromogenic substrates (e.g., AEC (3-amino-9-ethyl-carbazole)) that develop colors in response to the labelling of the secondary antibody are usable.

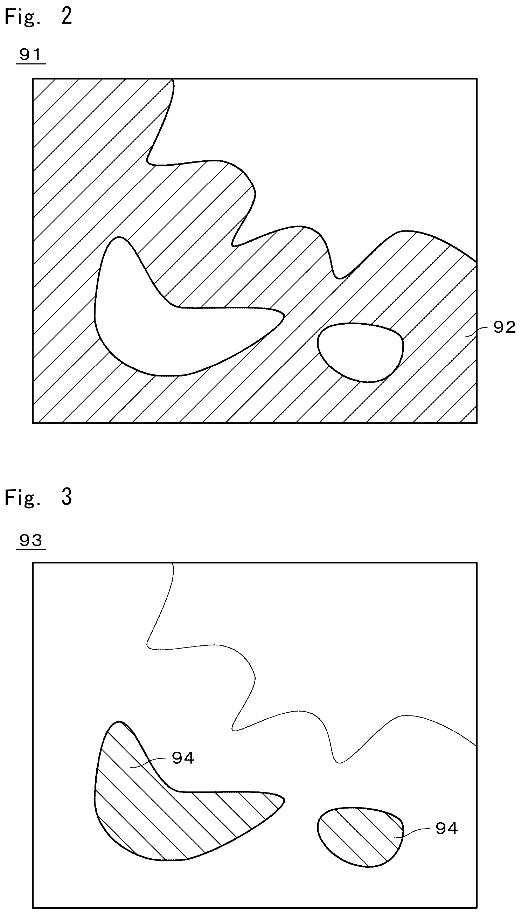

Thereafter, an image of a part or whole of the test specimen stained in steps S11 and S12 is captured to acquire a stained image (hereinafter, also referred to as the "first image") (step S13). Fig. 2 is a diagram showing one example of a first image 91. In the first image 91 shown in Fig. 2, an area 92 that is stained (i.e., an area where stained cells are clustered; hereinafter also referred to as the "stained area 92") is cross-hatched.

When no stained cells are confirmed in the first image 91 and when the distribution of stained cells in the first image has no specificity, the aforementioned first primary staining condition is considered to be inappropriate. In this case, steps S11 and S12 may be re-executed. Specifically, the test specimen is cleaned to remove the primary and secondary antibodies and the chromogenic substrate on the test specimen. After the cleaning of the test specimen, the primary and secondary antibodies on the test specimen may be inactivated. Thereafter, the first primary staining condition is changed, and steps S11 to S13 are performed.

When step S13 ends, the test specimen is cleaned to remove the first primary antibody, the secondary antibody, and the chromogenic substrate on the test specimen. The first primary antibody and the secondary antibody on the test specimen may also be inactivated (step S14). That is, in step S14, the first primary antibody on the test specimen is at least either inactivated or removed. The cleaning of the test specimen is carried out using, for example, phosphate-buffered physiological saline (PBS) or Tris-buffered physiological saline (TBS). The cleaning of the test specimen may be carried out multiple times. The inactivation of the first primary antibody and the secondary antibody may be carried out by, for example, heat treatment or the like in which the test specimen is immersed in extremely hot water. The inactivation of the first primary antibody and the secondary antibody may be carried out by any of various other methods. The removal of the chromogenic substrate (to be precise, the removal of color developed by color precipitates derived from the chromogenic substrate) may also be carried out by any of various methods. In the case where the chromogenic substrate is an AEC, for example, the chromogenic substrate may be removed by immersing and cleaning the test specimen in alcohol with a plurality of concentrations such as ethanol. The cleaning of the test specimen in step S14 and the removal and/or inactivation of the first primary antibody and the secondary antibody are carried out under the same treatment condition as that for cleaning and inactivation that are to be carried out between the N-th immunostaining and the (N+1)-th immunostaining described above.

When step S14 ends, antigen retrieval of the test specimen and the application of the primary antibody to the test specimen are carried out under a staining condition with which the (N+1)-th immunostaining is considered to be carried out in the above-described sequential multiple immunostaining (step S15). The primary antibody applied in step S15 is a primary antibody that is used in the above-described the (N+1)-th immunostaining, and is hereinafter also referred to as the "second primary antibody". In the following description, the staining condition used in step S15 is also referred to as the "second staining condition" or the "second primary staining condition". The second primary antibody is an antibody derived from the same animal species as the aforementioned first primary antibody, but is an antibody of a different type from the first primary antibody. The second primary staining condition may be the same as or different from the aforementioned first primary staining condition. When the antigen retrieval in step S15 and the inactivation of the primary and secondary antibodies in step S14 are both heat treatment, the inactivation of the primary and secondary antibodies (step S14) and the antigen retrieval (step S15) may be carried out in parallel with each other by one heat treatment.

When step S15 ends, a secondary antibody and a chromogenic substrate are applied to the test specimen under the secondary staining condition with which the aforementioned (N+1)-th immunostaining is to be carried out (step S16). The secondary antibody and the chromogenic substrate used in step S16 are those used in the above-described (N+1)-th immunostaining and are of the same type as those used in step S12. The secondary staining condition used in step S16 may be the same as or different from the secondary staining condition used in step S12.

On the test specimen, cells that bind to the first primary antibody applied in step S11 (i.e., cells stained using the first primary antibody) are different from cells that bind to the second primary antibody applied in step S15 (i.e., cells stained using the second primary antibody). Thus, when the removal and/or inactivation of the first primary antibody is carried out favorably in step S14, the area where there are cells stained by the application of the secondary antibody and the chromogenic substrate in step S16 is different from and do not overlap with the area where there are cells stained by the application of the secondary antibody and the chromogenic substrate in step S12. On the other hand, when the removal and/or inactivation of the primary antibody is not carried out favorably in step S14, part of the area where there are cells stained by the application of the secondary antibody and the chromogenic substrate in step S16 overlap with the area where there are cells stained by the application of the secondary antibody and the chromogenic substrate in step S12.

When step S16 ends, an image of a part or whole of the test specimen stained in steps S15 and S16 is captured to acquire a stained image (hereinafter, referred to as the "second image") (step S17). Fig. 3 is a diagram showing one example of a second image 93. In the second image 93 shown in Fig. 3, an area 94 that is stained (i.e., an area where stained cells are clustered; hereinafter also referred to as the "stained area 94") is cross-hatched.

Thereafter, stained cells are detected from each of the first image 91 and the second image 93. Then, the propriety or impropriety of each of the first primary staining condition in step S11 and the second primary staining condition in step S15 is determined based on the result of detection of the stained cells (step S18).

In step S18, for example, the distribution of stained cells in each of the first image 91 and the second image 93 is checked (i.e., detected) by an operator's visual inspection of the first image 91 and the second image 93. Specifically, whether cells are stained in a specific manner in the first image 91 is checked, or whether cells are stained in a specific manner in the second image 93 is checked. Moreover, the first image 91 and the second image 93 are compared to check whether the cells stained in the first image 91 are not stained in the second image 93.

Then, when it is confirmed that the cells are stained in a specific manner (i.e., the stained cells are distributed in a specific manner) in each of the first image 91 and the second image 93 and that the cells stained in the first image 91 are not stained in the second image 93, the first primary staining condition for the application of the first primary antibody in step S11 and the second primary staining condition for the application of the second primary antibody in step S15 are determined to be appropriate.

Otherwise, the first and/or second primary staining condition are/is determined to be inappropriate. For example, when there are almost no stained cells in the first image 91, it is conceivable that the concentration and/or reaction time of the first primary antibody applied in step S11 are/is insufficient. When there are almost no stained cells in the second image 93, it is conceivable that the concentration and/or reaction time of the second primary antibody applied in step S15 are/is insufficient. In the comparison of the first image 91 and the second image 93, when some or all of the stained cells in the first image 91 are also stained in the second image 93 (i.e., the stained area 92 in the first image 91 and the stained area 94 in the second image 93 overlap at least in part), it is conceivable that the concentration(s) of the first primary antibody applied in step S11 and/or the second primary antibody applied in step S15 are/is too high and/or the reaction time(s) thereof are/is too long.

If the first primary staining condition is determined to be inappropriate in step S18, for example, a new test specimen is prepared, and steps S11 to S18 are performed after changing the first primary staining condition. If the second primary staining condition is determined to be inappropriate in step S18, for example, a new test specimen is prepared, and steps S11 to S18 are performed after changing the second primary staining condition. Then, steps S11 to S18 are repeated while replacing a test specimen until appropriate first and second primary staining conditions are acquired. Alternatively, steps S11 to S18 may be performed by, for example, instead of preparing a new test specimen, thoroughly cleaning and heat-treating (i.e., inactivating) the test specimen determined to be inappropriate in step S18 to almost completely remove and/or inactivate the primary and secondary antibodies and the chromogenic substrate on the test specimen.

When the appropriate staining conditions for the N-th immunostaining and the (N+1)-th immunostaining described above are acquired in step S18, for example, the propriety or impropriety of the staining conditions for the (N+1)-th immunostaining and the (N+2)-th immunostaining, among multiple repetitions of immunostaining carried out during the sequential multiple immunostaining, is evaluated by using the test specimen used in the acquisition of the staining condition. Specifically, for example, the test specimen that has undergone step S18 is cleaned and/or heat-treated to remove and/or inactivate the primary and secondary antibodies and the chromogenic substrate thereon, and thereafter steps S11 to S18 are performed under a staining condition with which the (N+1)-th immunostaining and the (N+2)-th immunostaining are to be carried out.

In the aforementioned staining-condition evaluation method, the propriety or impropriety of the staining condition may be sequentially evaluated for all of the multiple repetitions of immunostaining carried out during the sequential multiple immunostaining, or the propriety or impropriety of the staining condition may be sequentially evaluated for some of the multiple repetitions of immunostaining. Alternatively, one test specimen may be used to evaluate the propriety or impropriety of the staining condition for some of the above-described multiple repetitions of immunostaining, and another test specimen may be used to evaluate the propriety or impropriety of the staining condition for another some of the multiple repetitions of immunostaining.

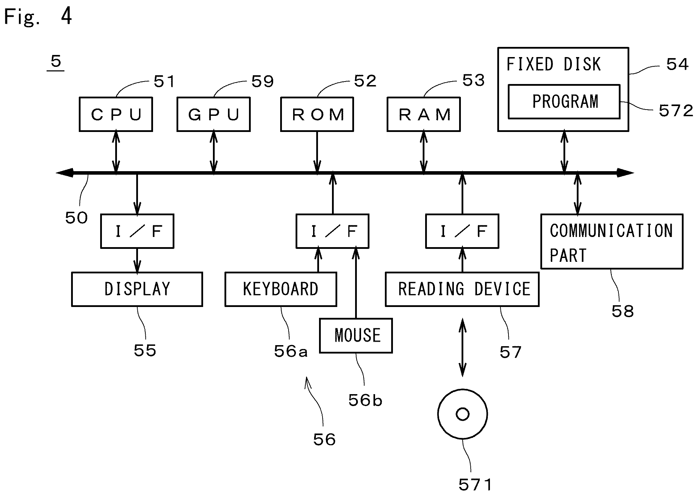

In step S18, for example, the propriety or impropriety of the first primary staining condition used in step S11 and the propriety or impropriety of the second primary staining condition used in step S15 may be determined by a computer 5 executing a program 572 shown in Fig. 4.

The computer 5 has a common computer system configuration that includes a CPU 51, ROM 52. RAM 53, a fixed disk 54, a display 55, an input unit 56, a reader 57, a communicator 58, a GPU 59, and a bus 50. The CPU 51 performs a variety of arithmetic processing. The GPU 59 performs a variety of arithmetic processing related to image processing. The ROM 52 stores basic programs. The RAM 53 stores a variety of information. The fixed disk 54 stores information. The display 55 is a display unit that displays a variety of information such as images.

The input unit 56 includes a keyboard 56a and a mouse 56b that accept input from the operator. The reader 57 reads information from a computer-readable recording medium 571 such as an optical disk, a magnetic disk, a magneto-optical disk, or a memory card. The display 55, the keyboard 56a, the mouse 56b, and the reader 57 are connected to the bus 50 via interfaces I/F. The communicator 58 transmits and receives signals to and from devices or the like outside the computer 5. The bus 50 is a signal circuit that connects the CPU 51, the GPU 59, the ROM 52, the RAM 53, the fixed disk 54, the display 55, the input unit 56, the reader 57, and the communicator 58.

The computer 5 reads a program 572 in advance from the recording medium 571 via the reader 57 and stores the program in the fixed disk 54. The program 572 may be stored in the fixed disk 54 via a network. The CPU 51 and the GPU 59 execute arithmetic processing while using the RAM 53 or the fixed disk 54 in accordance with the program 572 for evaluating a staining condition. The CPU 51 and the GPU 59 function as an arithmetic section in the computer 5. As the arithmetic section, any configuration other than the CPU 51 and the GPU 59 may also be employed.

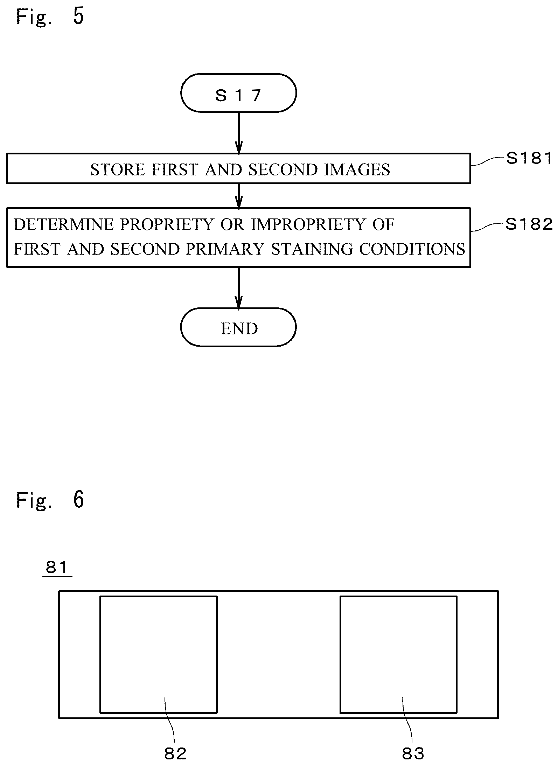

Fig. 5 is a flowchart showing a specific procedure when step S18 is performed by the computer 5. First, the first image 91 acquired in step S13 and the second image 93 acquired in step S17 are stored in a storage realized by, for example, the RAM 53 and the fixed disk 54 (step S181).

Then, stained cells in each of the first image 91 and the second image 93 are detected by a determiner realized by the CPU 51, the GPU 59, the ROM 52, the RAM 53, the fixed disk 54, and their peripheral components, and the propriety or impropriety of the first and second primary staining conditions is determined based on the result of detection of the stained cells (step S182).

Specifically, the above-described determiner checks whether or not cells in the first image 91 are stained in a specific manner and whether or not cells in the second image 93 are stained in a specific manner. The determiner further compares the first image 91 and the second image 93 to check whether the cells stained in the first image 91 are not stained in the second image 93.

The checking of whether or not cells in each of the first image 91 and the second image 93 are stained in a specific manner (i.e., the detection of the stained cells in the first image 91 and the second image 93) is carried out by using, for example, a trained model created by machine learning. The trained model is created by subjecting an initial model for detecting specificity in the distribution of stained cells to machine learning using a learning data set that is a cluster of images for learning. The learning data set includes images of specimens where stained cells are distributed in a specific manner and images of specimens where stained cells are not distributed in a specific manner. The machine learning is, for example, deep learning using a neural network. The training by deep learning is carried out using, for example, the U-Net. Note that the machine learning may be carried out by any method other than deep learning.

The checking of whether cells in each of the first image 91 and the second image 93 are stained in a specific manner in step S182 does not necessarily have to be carried out by using the trained model, and may be carried out by any other method executed by the computer 5.

For the aforementioned comparison of the first image 91 and the second image 93, the first image 91 and the second image 93 are aligned with each other by the above-described determiner. For example, the first image 91 and the second image 93 may be aligned automatically by a known image registration technique, or may be aligned manually by the operator.

The above description is given using an example in which the staining using the first primary antibody (steps S11 and S12) and the staining using the second primary antibody (steps S15 and S16) correspond to consecutive two repetitions of immunostaining (e.g., the N-th immunostaining and the (N+1)-th immunostaining) among multiple repetitions of immunostaining carried out during sequential multiple immunostaining, but the present invention is not limited to this example. In the sequential multiple immunostaining, staining using another primary antibody may be also carried out between the staining using the first primary antibody and the staining using the second primary antibody as long as the staining using the second primary antibody is carried out after the staining using the first primary antibody. In this case, the application of the other primary antibody, the application of a secondary antibody and a chromogenic substrate that correspond to the other primary antibody, and the removal and/or inactivation of the other primary antibody are also carried out similarly between steps S14 and S15 in the aforementioned staining-condition evaluation method. Note that this other primary antibody is, for example, an antibody derived from animal species different from the first primary antibody and the second primary antibody.

As described thus far, the staining-condition evaluation method of evaluating a staining condition for a specimen in immunostaining includes the step of applying the first primary antibody to a test specimen under the first staining condition (i.e., the first primary staining condition) (step S11), the step of applying a secondary antibody and a chromogenic substrate to the test specimen after step S11 (step S12), the step of capturing an image of the test specimen to acquire the first image 91 after step S12 (step S13), the step of inactivating or removing the first primary antibody on the test specimen after step S13 (step S14), the step of applying the second primary antibody to the test specimen under the second staining condition (i.e., the second primary staining condition) after step S14 (step S15), the step of applying the above-described secondary antibody and the above-described chromogenic substrate to the test specimen after step S15 (step S16), the step of capturing an image of the test specimen to acquire the second image 93 after step S16 (step S17), and the step of determining the propriety or impropriety of the first staining condition and the second staining condition in accordance with the result of detecting stained cells in each of the first image 91 and the second image 93 after step S17 (step S18).

On the test specimen, cells stained using the first primary antibody are different from cells stained using the second primary antibody. In step S18, the first and second staining conditions are determined to be appropriate when cells on the test specimen are stained in a specific manner in the first image 91, when cells on the test specimen, different from the cells stained in the first image 91, are stained in a specific manner in the second image 93, and when the cells stained in the first image 91 are not stained in the second image 93 on the test specimen. As described above, this facilitates the determination of the propriety or impropriety of the first and second staining conditions during two repetitions of immunostaining carried out in sequence.

As described above, it is preferable in step S18 that the detection of stained cells in the first image 91 and the detection of stained cells in the second image 93 are each carried out using a trained model created by machine learning. This allows the presence or absence of stained cells in each of the first image 91 and the second image 93 to be checked automatically and accurately.

As described above, it is preferable that the first primary antibody and the second primary antibody are used in sequential multiple immunostaining of one specimen, and the staining using the second primary antibody is carried out after the staining using the first primary antibody in the sequential multiple immunostaining. This allows the sequential multiple immunostaining to be carried out under the appropriately set first and second staining conditions.

The aforementioned program 572 is a computer-readable program for causing a computer to evaluate a staining condition for a specimen in immunostaining. The program 572 causes the computer to execute the step of storing the first image 91, which is the image of the stained test specimen, and the second image 93, which is the image of the test specimen stained under a different condition from the condition used for the first image 91 (step S181), and the step of determining the propriety or impropriety of the first and second staining conditions (i.e., the first and second primary staining conditions) in accordance with the result of detection of the stained cells in each of the first image 91 and the second image 93 (step S182). The first image 91 is an image of the test specimen with the first primary antibody applied thereto under the first staining condition and with the secondary antibody and the chromogenic substrate further applied thereto. The second image 93 is an image of the test specimen with the second primary antibody applied thereto under the second staining condition after the acquisition of the first image 91 and the inactivation or removal of the first primary antibody on the test specimen, and with the above-described secondary antibody and the above-described chromogenic substrate further applied thereto.

On the test specimen, the cells stained using the first primary antibody are different from the cells stained using the second primary antibody. In step S182, the first and second staining conditions are determined to be appropriate when the cells on the test specimen are stained in a specific manner in the first image 91, when cells on the test specimen, different from the cells stained in the first image 91, are stained in a specific manner in the second image 93, and when the cells stained in the first image 91 are not stained in the second image 93 on the test specimen. As described above, this facilitates the determination of the propriety or impropriety of the first and second staining conditions during two repetitions of immunostaining carried out in sequence.

Next description is given regarding a staining-condition evaluation method according to a second embodiment of the present invention. Fig. 6 is a plan view of a slide 81 that is used in the staining-condition evaluation method according to the second embodiment. The staining-condition evaluation method uses one slide 81 to determine the propriety or impropriety of each of the two combinations of primary staining conditions in steps S11 and S15 in parallel with each other.

As shown in Fig. 6, the slide 81 has the aforementioned test specimen (hereinafter, indicated by a reference sign 82) and another test specimen 83 placed thereon. Like the test specimen 82, the test specimen 83 is acquired from the same tissue as a specimen that is to be stained and analyzed in the aforementioned sequential multiple immunostaining. Note that the slide 81 may have three or more test specimens placed thereon.

A procedure for evaluating staining conditions by using the slide 81 is described hereinafter with reference to Fig. 1. First, one slide 81 shown in Fig. 6 is created and prepared before step S11. Then, in step S11, the antigen retrieval of the test specimen 83 and the application of the first primary antibody to the test specimen 83 are carried out in approximately parallel with the antigen retrieval of the test specimen 82 and the application of the first primary antibody to the test specimen 82. The first primary antibody applied to the test specimen 83 is the same as that applied to the test specimen 82. In step S11, the first primary antibody is applied to the test specimen 83 under a third primary staining condition. The third primary staining condition may be the same as or different from the first primary staining condition for the application of the first primary antibody to the test specimen 82. For example, the third primary staining condition may be obtained by shifting a predetermined parameter (e.g., the concentration or reaction time of the first primary antibody) by a predetermined amount from the first primary staining condition.

Then, in step S12, a secondary antibody and a chromogenic substrate are also applied to the test specimen 83 in approximately parallel with the application of the secondary antibody and the chromogenic substrate to the test specimen 82. As a result, specific cells or the like that bind to the first primary antibody are also stained in the test specimen 83. The secondary antibody and the chromogenic substrate applied to the test specimen 83 are the same as those applied to the test specimen 82. In step S12, the secondary antibody and the chromogenic substrate are applied to the test specimen 83 under the same staining condition as the secondary staining condition for the test specimen 82.

In step S13, an image of the test specimen 83 is acquired to acquire a third image in approximately parallel with the acquisition of the first image 91. In step S14, the primary and secondary antibodies and the chromogenic substrate on the test specimen 83 are also removed and/or inactivated in approximately parallel with the removal and/or inactivation of the primary and secondary antibodies and the chromogenic substrate on the test specimen 82.

Then, in step S15, the antigen retrieval of the test specimen 83 and the application of a second primary antibody to the test specimen 83 are also carried out in approximately parallel with the antigen retrieval of the test specimen 82 and the application of the second primary antibody to the test specimen 82. The second primary antibody applied to the test specimen 83 is the same as that applied to the test specimen 82. In step S15, the second primary antibody is applied to the test specimen 83 under a fourth primary staining condition. The fourth primary staining condition may be the same as or different from the second primary staining condition for the application of the second primary antibody to the test specimen 82. For example, the fourth primary staining condition may be obtained by shifting a predetermined parameter (e.g., the concentration or reaction time of the second primary antibody) by a predetermined amount from the second primary staining condition.

In the case where the fourth primary staining condition is the same as the second primary staining condition, the third primary staining condition is different from the first primary staining condition. In the case where the third primary staining condition is the same as the first primary staining condition, the fourth primary staining condition is different from the second primary staining condition. That is, at least the third primary staining condition is different from the first primary staining condition, or the fourth primary staining condition is different from the second primary staining condition.

Then, in step S16, a secondary antibody and a chromogenic substrate are also applied to the test specimen 83 in approximately parallel with the application of the secondary antibody and the chromogenic substrate to the test specimen 82. The secondary antibody and the chromogenic substrate applied to the test specimen 83 are the same as those applied to the test specimen 82. In step S16, the secondary antibody and the chromogenic substrate are applied to the test specimen 83 under the same staining condition as the secondary staining condition for the test specimen 82. In step S17, an image of the test specimen 83 is captured to acquire a fourth image in approximately parallel with the acquisition of the second image 93.

Thereafter, in step S18, the propriety or impropriety of the third and fourth primary staining conditions for the test specimen 83 is determined based on the result of detection of the stained cells in each of the third and fourth images in approximately parallel with the determination of the propriety or impropriety of the first and second primary staining conditions for the test specimen 82. Specifically, whether cells are stained in a specific manner in the third image is checked, and whether cells are stained in a specific manner in the fourth image is checked. Moreover, the third and fourth images are compared to check whether the cells stained in the third image are not stained in the fourth image.

Then, the third primary staining condition for the application of the first primary antibody to the test specimen 83 and the fourth primary staining condition for the application of the second primary antibody to the test specimen 83 are determined to be appropriate when cells are stained in a specific manner (i.e., stained cells are distributed in a specific manner) in each of the third and fourth images and when the cells stained in the third image are not stained in the fourth image. Otherwise, the third and/or fourth primary staining conditions are/is determined to be inappropriate in the same manner as described above. Note that the test specimens 82 and 83 described above may be provided on different slides 81.

As described thus far, in the staining-condition evaluation method according to the second embodiment, the slide 81 with the test specimen 82 and the other test specimen 83 placed thereon is prepared before step S11. In step S11, the first primary antibody is applied to the other test specimen 83 under the third staining condition. In step S12, the secondary antibody and the chromogenic substrate are also applied to the other test specimen 83. In step S13, an image of the other test specimen 83 is captured to acquire the third image. In step S14, the first primary antibody on the other test specimen 83 is also inactivated or removed. In step S15, the second primary antibody is also applied to the other test specimen 83 under the fourth staining condition. In step S16, the secondary antibody and the chromogenic substrate are also applied to the other test specimen 83. In step S17, an image of the other test specimen 83 is captured to acquire the fourth image.

In step S18, the propriety or impropriety of the third and fourth staining conditions is also determined based on the result of detection of the stained cells in the third and fourth images. In step S18, the third and fourth staining conditions are determined to be appropriate when cells on the other test specimen 83 are stained in a specific manner in the third image, when cells on the other test specimen 83, different from the cells stained in the third image, are stained in a specific manner in the fourth image, and when the cells stained in the third image are not stained in the fourth image on the other test specimen 83. This enables determining the propriety or impropriety of each of the two combinations of primary staining conditions in steps S11 and S15 in parallel with each other.

The slide 81 may have three or more test specimens placed thereon. Then, the first and second primary antibodies may be applied to these three or more test specimens under different combinations of the primary staining conditions in steps S11 and S15. As a result, the propriety or impropriety of each of the three or more combinations of the primary staining conditions in steps S11 and S15 can be determined in parallel with one another.

The staining-condition evaluation methods and the program described above may be modified in various ways.

The antigen retrieval in steps S11 and S15 may be omitted.

The aforementioned staining-condition evaluation methods do not necessarily have to be used for the evaluation of staining conditions in sequential multiple immunostaining, and may be used for the evaluation of staining conditions in any other type of immunostaining. The specimens and the test specimens described above do not necessarily have to be biological specimens, and may be any other specimens.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 5: computer
- 81: slide
- 82: test specimen
- 83: test specimen
- 91: first image
- 93: second image
- 572: program
- S11 to S18, S181 to S182: step

## Claims

1. A staining-condition evaluation method of evaluating a staining condition for a specimen in immunostaining, the staining-condition evaluation method comprising:
a) applying a first primary antibody to a test specimen under a first staining condition;
b) after said process a), applying a secondary antibody and a chromogenic substrate to said test specimen;
c) after said process b), capturing an image of said test specimen to acquire a first image;
d) after said process c), inactivating or removing said first primary antibody on said test specimen;
e) after said process d), applying a second primary antibody to said test specimen under a second staining condition;
f) after said process e), applying said secondary antibody and said chromogenic substrate to said test specimen;
g) after said process f), capturing an image of said test specimen to acquire a second image; and
h) after said process g), determining propriety or impropriety of said first staining condition and said second staining condition in accordance with a result of detecting whether or not there is a stained cell in each of said first image and said second image,
wherein a cell stained using said first primary antibody is different from a cell stained using said second primary antibody, and
in said process h), said first staining condition and said second staining condition are determined to be appropriate when a cell on said test specimen is stained in a specific manner in said first image, when a cell on said test specimen, different from the cell stained in said first image, is stained in a specific manner in said second image, and when the cell stained in said first image is not stained in said second image on said test specimen.

2. The staining-condition evaluation method according to claim 1, wherein
in said process h), the detection of whether or not there is a stained cell in said first image and the detection of whether or not there is a stained cell in said second image are each conducted using a trained model created by machine learning.

3. The staining-condition evaluation method according to claim 1 or 2, wherein
before said process a), a slide with said test specimen and another test specimen placed thereon is prepared,
in said process a), said first primary antibody is applied to said another test specimen under a third staining condition,
in said process b), said secondary antibody and said chromogenic substrate are also applied to said another test specimen,
in said process c), an image of said another test specimen is captured to acquire a third image,
in said process d), said first primary antibody on said another test specimen is also inactivated or removed,
in said process e), said second primary antibody is applied to said another test specimen under a fourth staining condition,
in said process f), said secondary antibody and said chromogenic substrate are also applied to said another test specimen,
in said process g), an image of said another test specimen is captured to acquire a fourth image,
in said process h), propriety or impropriety of said third staining condition and said fourth staining condition is also determined in accordance with a result of detecting whether or not there is a stained cell in each of said third image and said fourth image, and
in said process h), said third staining condition and said fourth staining condition are determined to be appropriate when a cell on said another test specimen is stained in a specific manner in said third image, when a cell on said another test specimen, different from the cell stained in said third image, is stained in a specific manner in said fourth image, and when the cell stained in said third image is not stained in said fourth image on said another test specimen.

4. The staining-condition evaluation method according to claim 1 or 2, wherein
said first primary antibody and said second primary antibody are used in sequential multiple immunostaining of one specimen, and
in said sequential multiple immunostaining, staining using said second primary antibody is conducted after staining using said first primary antibody.

5. A computer-readable program for causing a computer to evaluate a staining condition for a specimen in immunostaining, the computer-readable program causing a computer to execute:
i) storing a first image and a second image, the first image being an image of a test specimen that is stained, the second image being an image of said test specimen that is stained under a different condition from a condition for said first image; and
j) determining propriety or impropriety of a staining condition in accordance with a result of detecting whether or not there is a stained cell in each of said first image and said second image,
wherein said first image is captured while a first primary antibody is applied to said test specimen under a first staining condition, and a secondary antibody and a chromogenic substrate are further applied to said test specimen,
said second image is captured while, after said first image is acquired and said first primary antibody on said test specimen is inactivated or removed, a second primary antibody is applied to said test specimen under a second staining condition, and said secondary antibody and said chromogenic substrate are further applied to said test specimen,
a cell stained using said first primary antibody is different from a cell stained using said second primary antibody, and
in said process j), said first staining condition and said second staining condition are determined to be appropriate when a cell on said test specimen is stained in a specific manner in said first image, when a cell on said test specimen, different from the cell stained in said first image, is stained in a specific manner in said second image, and when the cell stained in said first image is not stained in said second image on said test specimen.
